# EUROPÄISCHE PATENTSCHRIFT

(11) **EP 1 966 628 B1**
(45) Veröffentlichungstag und Bekanntmachung des Hinweises auf die Patenterteilung: **30.05.2012**
(21) Anmeldenummer: 06830030.0
(22) Anmeldetag: 17.11.2006
(51) Int. Cl.: G01S 7/52, G01S 15/93

(54) **ULTRASCHALLSENSOR**
ULTRASONIC SENSOR
CAPTEUR A ULTRASONS

(30) Priorität: 22.12.2005 DE 102005061396
(43) Veröffentlichungstag der Anmeldung: 10.09.2008
(73) Patentinhaber: ROBERT BOSCH GMBH, 70442 Stuttgart (DE)
(72) Erfinder: DANZ, Christian, 14532 Kleinmachnow (DE); FABER, Petko, 71229 Leonberg (DE)
(86) Internationale Anmeldenummer: PCT/EP2006/068618
(87) Internationale Veröffentlichungsnummer: WO 2007/073990

(56) Entgegenhaltungen:
- EP-A- 1 150 135
- EP-A- 1 624 319
- WO-A-02/16958
- WO-A-2005/024463
- DE-A1- 10 225 614
- JP-A- 11 160 191
- JP-A- 11 304 911
- US-A1- 4 581 726
- US-A1- 4 608 674
- US-A1- 5 302 956

## Beschreibung

### Stand der Technik

Die Erfindung betrifft einen Ultraschallsensor insbesondere zur Parklückenlokalisierung, dessen wenigstens einer Empfindlichkeitsparameter nachsteuerbar ist.

Ultraschallsensoren werden zur Parklückenlokalisierung (PSL - Parking Space Lokalization) eingesetzt, um den Fahrer bei der Suche nach einer ausreichend großen Parklücke zu unterstützen. Ist eine solche Parklücke gefunden, hilft der semiautonome Einparkassistent ebenfalls unter Einsatz eines Ultraschallsensors zügig in die vermessene Parklücke einzufahren.

Aus der JP 11-304911 ist es bekannt, die Empfindlichkeit eines Ultraschallsensors in Abhängigkeit des Vorhandenseins von Regen anhand des Einschaltzustandes des Scheibenwischers zu verändern. Dort wird die Empfangsempfindlichkeit vermindert, um Störungen, die durch das Auftreffen von Regentropfen auf die Fahrbahn entstehen, zu unterdrücken.

Die DE 102 25 614 A1 zeigt einen Ultraschallsensor, dessen wenigstens einen Empfindlichkeitsparameter oder dessen Empfindlichkeitskennlinie in Abhängigkeit der Luftfeuchtigkeit und/oder der Temperatur so nachsteuerbar ist, dass eine vorgegebene Reichweite oder ein Reichweitenbereich sicher erreichbar ist.

Die WO 2005/024463 A zeigt eine Plausibilitätskontrolle für die Erkennung des Bordsteins und/oder der Außenkonturen parkender Fahrzeuge, wobei die Länge und die Breite der Parklücke für ein autonomes Einparken ermittelt wird.

Die US-A1-4,581,726 bzw. die US-A1-4,608,674 zeigt einen Ultraschallsensor, dessen Empfindlichkeitsparameter oder dessen Empfindlichkeitskennlinie in Abhängigkeit von der Luftfeuchtigkeit verändert wird, derart, dass die bei hoher Luftfeuchtigkeit vorhandene Reichweitenreduktion kompensiert wird. Dabei werden Feuchtigkeitssensoren verwendet, in deren Abhängigkeit die Empfindlichkeit der Auswertung des Ultraschallsensors gesteuert wird.

Die US-A1-5 302 956 bzw. die WO 02/16958 A zeigt , den Einschaltzustand eines Scheibenwischers als Regen-/Feuchtigkeitssensor-Ersatz zu benutzen.

### Vorteile der Erfindung

Mit dem Ultraschallsensor nach Anspruch 1, dessen wenigstens einer Empfindlichkeitsparameter oder -kennlinie in Abhängigkeit der Luftfeuchtigkeit und/oder der Temperatur so nachsteuerbar ist, dass eine vorgegebene Reichweite oder ein Reichweitenbereich unabhängig von der sich ändernden Luftfeuchtigkeit und der Temperatur sicher erreichbar ist, lässt sich eine sichere Parklückenvermessung auch bei unterschiedlichen Witterungsverhältnissen durchführen. Insbesondere kann der Bordstein sowie die Außenkonturen parkender Fahrzeug sicher detektiert werden.

Da bei der JP 11-304911 die Empfangsempfindlichkeit bei Regen vermindert wird, ist eine vorgegebene Reichweite oder ein Reichweitenbereich nicht sicher erreichbar. Dadurch könnten zwar nahegelegene Objekte wie Fahrzeugecken störungsfreier detektiert werden, aber die Detektion ferner gelegener Objekte, wie z.B. der Bordstein, würde wesentlich verschlechtert werden. Bei der Erfindung lassen sich Objekte innerhalb einer vorgegebenen Reichweite bzw. einem Reichweitenbereich in jedem Falle sicher detektieren.

Um eine zufrieden stellende Bahnplanung für das semiautonome Einparken durchführen zu können, muss das Parklückenvermessungssystem erstens die Lage der Parklückenbegrenzungen mit einer hohen Genauigkeit bestimmen und zweitens eine Aussage über die Tiefe der Parklücke und Form generieren. Um eine Aussage über die Form der Parklücke treffen zu können, müssen die Parklückenbegrenzungen und der Bordstein sehr sicher detektiert werden.

Mit den Maßnahmen der Erfindung wird ein semiautonomer Einparkassistent (SPA) wirkungsvoll unterstützt. Der semiautonome Einparkassistent berechnet, nachdem eine passende Parklücke gefunden wurde, in Abhängigkeit von der Länge der Parklücke eine optimale Einfahrbahn. Mittels geeignetem HMI (Human Machine Interface) wird dem Fahrer die Information übermittelt, wie er zu lenken und Gas zu geben bzw. zu bremsen hat, um optimal in die Parklücke hereinzufahren. Die Abweichungen zur Solltrajektorie werden vom Fahrer selbst oder automatisch abgeglichen. Die Längsbewegurig wird vom Fahrer bestimmt. Das Lenken kann auch automatisch durchgeführt werden und der Fahrer übernimmt nur noch das Gasgeben und Bremsen.

Da besonders für die Funktion Bordsteinerkennung die Kombination der Luftfeuchtigkeit mit der Temperatur einen großen Einfluss auf die Reichweite der Messung hat, kann in einer vorteilhaften Ausgestaltung der Erfindung das Einschalten des Scheibenwischers als Indikator genutzt werden, um in Kombination mit der vom Temperatursensor gelieferten Temperatur die Empfindlichkeitskennlinie der Ultraschallsensoren so anzupassen, dass noch eine gute Detektion der Fahrzeugecken und des Bordsteins mit dem Ultraschallsensor möglich ist. Das Einschalten des Scheibenwischers dient also als Indikator für eine sehr hohe Luftfeuchte.

In einer weiteren vorteilhaften Ausführungsform kann, wenn vorhanden, die Information über die vorliegende Luftfeuchtigkeit des fahrzeugeigenen Luftfeuchtigkeitssensors zur Anpassung der Empfmdlichkeitsparameter der Ultraschallsensoren genutzt werden.

In einer weiteren Ausführungsform kann, wenn vorhanden, die Information des Regensensors zur Anpassung der Empfmdlichkeitsparameter der Ultraschallsensoren genutzt werden.

Das Detektionsfeld der Sensoren für die Parklückenlokalisierung wird durch Anpassung der Empfindlichkeitsparameter auf Basis der Information über die Luftfeuchte so gewählt, dass eine hohe Detektionsreichweite erreicht wird, d.h. die Empfindlichkeit des Sensoren wird in Abhängigkeit von der Luftfeuchtigkeit angepasst. Somit kann sichergestellt werden, dass auch bei sich verändernder Luftfeuchtigkeit und Temperatur eine hohe Genauigkeit der Parklückenlokalisierung inkl. der Bordsteinerkennung erreicht werden kann.

### Zeichnungen

Anhand der Zeichnungen wird die Erfindung näher erläutert. Es zeigen
Figur 1 eine Parklückenlokalisierung inkl. Bordsteindetektion ohne Regen,
Figur 2 eine Parklückenlokalisierung inkl. Bordsteindetektion bei Regen ohne erfindungsgemäße adaptive Anpassung der Empfindlichkeitsparameter,
Figur 3 eine Parklückenlokalisierung inkl. Bordsteindetektion bei Regen mit erfindungsgemäßer adaptiver Anpassung der Empfindlichkeitsparameter.

### Beschreibung des Ausführungsbeispiels

Bei der Erfindung wird das Detektionsfeld der für die Parklückenlokalisierung genutzten Ultraschallsensoren durch Anpassung der Empfindlichkeitsparameter oder deren - kennlinie/n auf Basis der Temperatur und/oder Luftfeuchtigkeit so gewählt, dass eine vorgegebene Detektionsreichweite oder ein Reichweitenbereich erreicht wird, d.h. die Empfindlichkeit mindestens eines Ultraschallsensors wird in Abhängigkeit von der Luftfeuchtigkeit und gegebenenfalls auch der Temperatur angepasst. Somit kann sichergestellt werden, dass auch bei sich verändernder Luftfeuchtigkeit und Temperatur eine hohe Genauigkeit der Parklückenlokalisierung inkl. Bordsteinerkennung erreicht werden kann. Es erfolgt eine Auswertung der Luftfeuchtigkeit und/oder Temperatur zur Anpassung des Ausleuchtbereiches des Ultraschallsensors bzw. der Ultraschallsensoren auf der Basis fahrzeugeigener Signale, die beispielsweise ein Temperatursensor, ein Luftfeuchtigkeitssensor, ein Regensensor oder ein detektiertes Signal über den Einschaltzustand des Scheibenwischers zur Verfügung stellt für die Anpassung der Empfindlichkeitsparameter der Sensoren zur Erhöhung der Genauigkeit der Parklückenlokalisierung und der Bordsteindetektion.

Besonders vorteilhaft an der Erfindung ist, dass eine Erhöhung der Genauigkeit der Eckenlokalisierung und der Bordsteindetektion erreicht werden kann. Diese Informationen sind für die nachfolgende Bahnplanung sehr wichtig, um eine gute Funktionalität des SPA-Systems sicherzustellen.

Das PSL-System mit optimierter Parklückenlökalisierung für semiautonomes Einparken ist z.B. aus einem Front-Cluster, z.B. sechs Sensoren, einem Heck-Cluster z.B. ebenfalls sechs Sensoren, einem Wegsignalgeber, gegebenenfalls mit Lenkwinkelgeber und einem elektronischen Steuergerät aufgebaut. Beim PSL-System sind jeweils zwei Sensoren an der Front und/oder am Heck nach rechts und links zur Seite so ausgerichtet, dass sie den Bereich seitlich des Fahrzeugs gut erfassen können und so beim Vorbeifahren Länge und Tiefe einer Parklücke ausmessen können. Wenn der Fahrer einparken möchte, aktiviert er die PSL-Funktion. Das System geht in den Parklückenlokalisierungsmodus und zeigt an, wenn eine passende Parklücke gefunden wurde.

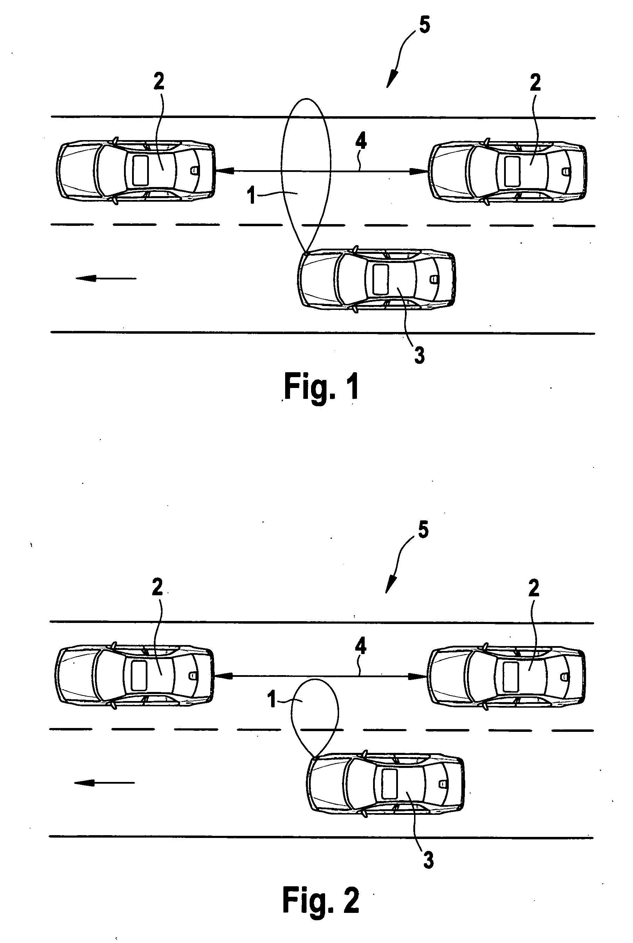

Figur 1 zeigt eine Parklückenlokalisierung inkl. Bordsteindetektion ohne Regen. Der vom Ultraschallsensor an der rechten Frontecke des eine Parklücke suchenden Fahrzeugs 3 abgedeckten Detektionsbereich 1 reicht mit Grundeinstellung der Empfindlichkeitsparameter ohne Regen bis zu Bordstein 5. Die parkenden Fahrzeuge 2 bestimmen die Länge der Parklücke 4.

Figur 2 zeigt die Parklückenlokalisierung inkl. Bordsteindetektion bei Regen ohne erfindungsgemäße Anpassung der Empfindlichkeitsparameter der Ultraschallsensoren. Der vom Ultraschallsensor abgedeckte Bereich mit Grundeinstellung seiner Empfindlichkeitsparameter bei Regen erreicht nicht den Bordstein 5.

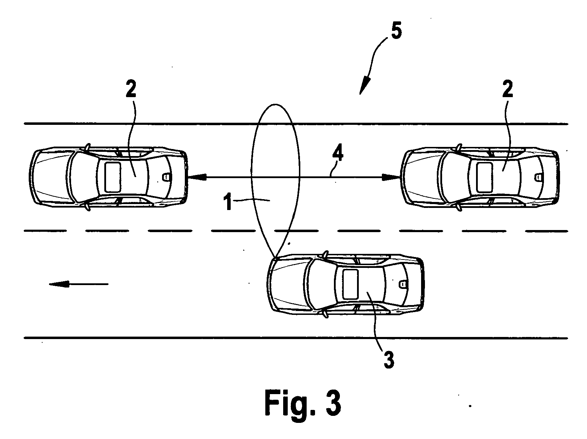

Figur 3 stellt die Parklückenlokalisierung inkl. Bordsteindetektion bei Regen dar mit erfindungsgemäßer adaptiver Anpassung der Empfindlichkeitsparameter, so dass der Bordstein wieder sicher detektiert werden kann und hohe Genauigkeit der PSL erreicht wird.

Die Nachsteuerung der Empfindlichkeitsparameter kann auf unterschiedlichen Wegen erfolgen. Bei Vorliegen einer erhöhten Luftfeuchtigkeit kann die Sendeleistung des mindestens einen Ultraschallsensors erhöht oder es kann die Empfangsempfindlichkeit erhöht und/oder die Detektionsschwelle des Sensors abgesenkt werden. Die Absenkung der Detektionsschwelle wie auch eine Erhöhung der Empfangsempfindlichkeit allein kann zu unverlässigeren Werten führen oder durch Rauschanteile verfälscht werden. In diesem Falle ist es besser zusätzlich die Sendeleistung zu erhöhen. Durch die Signaldämpfung bei erhöhter Luftfeuchtigkeit treten normalerweise keine unerwünschten Nebeneffekte auf, z.B. Reflexionen an unerwünschten Objekten höher als an erwünschten Objekten. Solche Effekte können durch selektive Reichweitenauswertungen sowie Zeitsteuerung der Auswertung/Ändern der räumlichen Empfindlichkeitscharakteristika durch Überlagerung der Signale mehrerer Sensoren oder Plausibilitätskontrollen bei der Ultraschallpulsmessung unterdrückt werden.

## Patentansprüche

1. Ultraschallsensor, dessen wenigstens einen Empfindlichkeitsparameter oder dessen Empfindlichkeitskennlinie in Abhängigkeit der Luftfeuchtigkeit so nachsteuerbar ist, dass eine vorgegebene Reichweite oder ein Reichweitenbereich sicher erreichbar ist, wobei bei Vorliegen einer erhöhten Luftfeuchtigkeit die Empfangsempfindlichkeit erhöht und/oder die Detektionsschwelle abgesenkt wird, **dadurch gekennzeichnet, dass** zusätzlich bei Vorliegen einer erhöhten Luftfeuchtigkeit die Sendeleistung des Ultraschallsensors erhöht wird.

2. Ultraschallsensor nach Anspruch 1, **dadurch gekennzeichnet, dass** die Reichweite derart vorgegeben wird, dass eine Bordsteinerkennung beim Vorbeifahren an einer Parklücke möglich ist.

3. Ultraschallsensor nach Anspruch 1 oder 2, **dadurch gekennzeichnet, dass** als Indikator für das Nachsteuern der Empfmdlichkeitsparameter der Einschaltzustand des Scheibenwischers genutzt wird.

4. Ultraschallsensor nach einem der Ansprüche 1 bis 3, **dadurch gekennzeichnet, dass** als Indikator für das Nachsteuern der Empfindlichkeitsparameter das Ansprechen des fahrzeugeigenen Regensensors genutzt wird.

5. Ultraschallsensor nach einem der Ansprüche 1 bis 4, **dadurch gekennzeichnet, dass** für das Nachsteuern des Empfmdlichkeitsparameters das Ausgangssignal eines fahrzeugeigenen Luftfeuchtigkeitssensors genutzt wird.

6. Verfahren unter Verwendung des Ultraschallsensors nach einem der Ansprüche 1 bis 5, **dadurch gekennzeichnet, dass** zur Erkennung des Bordsteins und/oder der Außenkonturen parkender Fahrzeuge, insbesondere deren Fahrzeugecken, mehrere Ultraschall-Pulsmessungen einer Plausibilitätskontrolle unterzogen werden.

7. Verfahren unter Verwendung des Ultraschallsensors nach einem der Ansprüche 1 bis 5 oder des Verfahrens nach Anspruch 6, **dadurch gekennzeichnet, dass** in Abhängigkeit der Signalauswertung mindestens eines Ultraschallsensors sowohl die Länge als auch die Tiefe einer Parklücke ermittelt wird und in Abhängigkeit davon eine optimale Einfahrbahn in die Parklücke ermittelt wird.

## Claims

1. Ultrasonic sensor whose at least one sensitivity parameter or whose sensitivity characteristic curve can be adjusted as a function of the air humidity in such a way that a predefined range can be reliably obtained, wherein when raised air humidity is present the reception sensitivity is increased and/or the detection threshold is lowered, **characterized in that** additionally when raised air humidity is present the transmission power of the ultrasonic sensor is increased.

2. Ultrasonic sensor according to Claim 1, **characterized in that** the range is predefined in such a way that it is possible to detect a kerb when travelling past a parking space.

3. Ultrasonic sensor according to Claim 1 or 2, **characterized in that** the switch-on state of the windscreen wiper is used as an indicator for the adjustment of the sensitivity parameters.

4. Ultrasonic sensor according to one of Claims 1 to 3, **characterized in that** the response of the vehicle-mounted rain sensor is used as an indicator for the adjustment of the sensitivity parameters.

5. Ultrasonic sensor according to one of Claims 1 to 4, **characterized in that** the output signal of a vehicle-mounted air humidity sensor is used for the adjustment of the sensitivity parameter.

6. Method using the ultrasonic sensor according to one of Claims 1 to 5, **characterized in that** in order to detect the kerb and/or the external contours of parked vehicles, in particular the corners of said vehicles, a plurality of ultrasonic pulse measurements are subjected to a plausibility check.

7. Method using the ultrasonic sensor according to one of Claims 1 to 5 or the method according to Claim 6, **characterized in that** both the length and the depth of a parking space are determined as a function of the signal evaluation of at least one ultrasonic sensor, and an optimum entry path into the parking space is determined as a function thereof.

## Revendications

1. Capteur à ultrasons, dont au moins un paramètre de sensibilité ou dont la caractéristique de sensibilité peut être asservi en fonction de l'humidité de l'air de telle manière qu'une portée prédéterminée ou qu'une région de portée puisse être obtenue de manière certaine, dans lequel, en présence d'une humidité de l'air accrue, la sensibilité de réception est augmentée et/ou le seuil de détection est réduit, **caractérisé en outre en ce qu'**en présence d'une humidité de l'air accrue, la puissance d'émission du capteur à ultrasons est augmentée.

2. Capteur à ultrasons selon la revendication 1, **caractérisé en ce que** la portée est prédéterminée de telle manière qu'une détection de trottoir soit possible lors du passage devant un espace de stationnement.

3. Capteur à ultrasons selon la revendication 1 ou 2, **caractérisé en ce qu'**on utilise en tant qu'indicateur pour l'asservissement des paramètres de sensibilité l'état de l'essuie-glace.

4. Capteur à ultrasons selon l'une quelconque des revendications 1 à 3, **caractérisé en ce qu'**on utilise en tant qu'indicateur pour l'asservissement des paramètres de sensibilité la réponse du capteur de pluie du véhicule.

5. Capteur à ultrasons selon l'une quelconque des revendications 1 à 4, **caractérisé en ce que**, pour l'asservissement du paramètre de sensibilité, on utilise le signal de sortie d'un capteur d'humidité de l'air du véhicule.

6. Procédé associé à l'utilisation du capteur à ultrasons selon l'une quelconque des revendications 1 à 5, **caractérisé en ce que**, pour la détection de trottoirs et/ou de contours extérieurs de véhicules en stationnement, notamment des coins des véhicules, on soumet une pluralité de mesures par impulsions ultrasonores à un contrôle de plausibilité.

7. Procédé associé à l'utilisation du capteur à ultrasons selon l'une quelconque des revendications 1 à 5 ou du procédé selon la revendication 6, **caractérisé en ce qu'**on détermine la longueur ainsi que la profondeur d'un espace de stationnement en fonction de l'évaluation des signaux d'au moins un capteur à ultrasons et **en ce qu'**on détermine en fonction de celles-ci une trajectoire d'approche optimale dans l'espace de stationnement.
